(19) Europäisches Patentamt
European Patent Office
Office européen des brevets

(11) EP 1 359 197 A1

(12) **EUROPEAN PATENT APPLICATION**

(43) Date of publication:
**05.11.2003 Bulletin 2003/45**

(51) Int Cl.⁷: **C08L 83/04**, C09D 183/04, C08L 63/00, C09D 163/00

(21) Application number: **02447079.1**

(22) Date of filing: **03.05.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **SigmaKalon Group B.V.**
**1422 AD Uithoorn (NL)**

(72) Inventors:
- **Klaassens, Lars Ivar**
**2033 AP Haarlem (NL)**
- **De Jong, Jan**
**1503 VC Zaandam (NL)**
- **Gillard, Michel**
**1348 Louvain-la-Neuve (BE)**
- **Van der Poel, Henk**
**2215 VL Voorhout (NL)**

(74) Representative:
**Brants, Johan Philippe Emile et al**
**De Clercq, Brants & Partners cv**
**Edgard Gevaertdreef 10a**
**9830 Sint-Martens-Latem (BE)**

(54) **Epoxy-polysiloxane resin based compositions useful for coatings**

(57) The present invention relates to an epoxy-polysiloxane composition obtainable by combining the following ingredients:

- a polysiloxane of formula (1), wherein each $R^1$ is independently selected from the group comprising hydroxy, alkyl, aryl and alkoxy radicals having up to six carbon atoms, each $R^2$ is independently selected from the group comprising hydrogen, alkyl and aryl radicals having up to six carbon atoms and, wherein n is selected so that the molecular weight for the polysiloxane is in the range of from about 400 to 10,000, with
- an epoxy resin having more than one 1,2-epoxy groups per molecule with an epoxy equivalent weight in the range of from 100 to about 5,000; and
- an aminopolysiloxane hardener component having active hydrogens able to react with the epoxy groups in the epoxy resin to form epoxy polymers, and able to react with the polysiloxane to form polysiloxane polymers, wherein the epoxy chain polymers and polysiloxane polymers polymerize to form a cured epoxy-polysiloxane polymer composition.

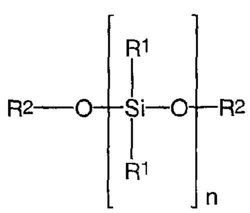

(1)

EP 1 359 197 A1

## Description

### FIELD OF THE INVENTION

This invention relates to epoxy-polysiloxane resin based compositions useful for protective coatings and the like having improved gloss retention.

### BACKGROUND

Epoxy coating materials are well known and have gained commercial acceptance as protective and decorative coatings for steel, aluminum, galvanized steel and concrete in maintenance, marine, construction, architectural, aircraft and product finishing markets. The basic raw materials used to prepare these coatings generally comprise as essential components (a) an epoxy resin, (b) a hardener and (c) a pigment or filler component.

Epoxy-based protective coatings possess many properties which make them desirable as coating materials. They are readily available and are easily applied by a variety of methods including spraying, rolling and brushing. They adhere well to steel, concrete and other substrates, have low moisture vapor transmission rates and act as barriers to water, chloride and sulfate ion ingress, provide excellent corrosion protection under a variety of atmospheric exposure conditions and have good resistance to many chemicals and solvents. Epoxy-based coatings generally show excellent protective properties, but have a considerable drawback which is the limited gloss and color retention when atmospherically exposed.

Epoxy-polysiloxane based compounds are known from US Patent No. 5,618,860. True advancements in the state-of-the-art for protective coatings require substantial improvements in weathering (primarily ultraviolet resistance), heat resistance, chemical resistance flexibility or corrosion control. Polysiloxane chemistry offers the potential for providing many of these advancements. Polysiloxane is defined as a polymer consisting of repeating silicon-oxygen atoms in the backbone that imparts several advantages over previously used carbon-based polymer binders; one of these advantages being an enhanced chemical and thermal resistance due to the silicon-oxygen bond. Polysiloxane's polymer linkage is also transparent to ultraviolet light making it resistant to ultraviolet degradation. Finally, polysiloxane is not combustible and is resistant to a wide range of chemicals and solvents, including acids.

Although epoxy-polysiloxane based coating materials generally do have resistance to weathering in sunlight, some of them still have poor gloss retention.

Thus, while epoxy-polysiloxane based coating materials have gained commercial acceptance, the need nevertheless remains for epoxy-polysiloxane based materials with improved properties. Coating materials with improved gloss retention are needed for both primary and secondary chemical containment structures, for protecting steel and concrete in chemical, power generation, rail car, sewage and waste water treatment, and paper and pulp processing industries.

A main object of the present invention is therefore to provide an epoxy-polysiloxane based coating composition having improved gloss retention while other properties like curing, hardness development, and chemical resistance are preserved.

### SUMMARY OF THE INVENTION

An epoxy-polysiloxane composition is prepared, according to principles of this invention, by combining the following ingredients:

- a polysiloxane of formula (1), wherein each $R^1$ is independently selected from the group comprising hydroxy, alkyl, aryl and alkoxy radicals having up to six carbon atoms, each $R^2$ is independently selected from the group comprising hydrogen, alkyl and aryl radicals having up to six carbon atoms and, wherein n is selected so that the molecular weight for the polysiloxane is in the range of from about 400 to 10,000;

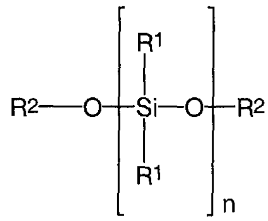

(1)

- an epoxy resin having more than one 1,2-epoxy groups per molecule with an epoxy equivalent weight in the range of from 100 to about 5,000; and

- an aminopolysiloxane hardener component having active hydrogens able to react with the epoxy groups in the epoxy resin to form epoxy polymers, and able to react with the polysiloxane to form polysiloxane polymers, wherein the epoxy chain polymers and polysiloxane polymers polymerize to form a cured interpenetrating epoxy-polysiloxane polymer composition.

The aminopolysiloxane hardener may be any amino-functional polysiloxane. Aminofunctional polysiloxanes are known from US Patent No. 3,890,269, EP 02 830 09, US patent No. 4,413,104, US patent Nos. 4,972,029 and 4,857,608 hereby incorporated by reference. US Patent No. 3,890,269 relates to a process for the preparation of aminofunctional polysiloxane polymers by equilibrating a mixture containing a cyclic organopolysiloxane with an amino functional silicon compound in the presence of a catalyst.

US Patent No. 4,857,608 relates to a process for preparing a coating by modifying epoxy resins with organosilicon compounds containing a basic nitrogen which is bonded to silicon via a carbon and which has at least one hydrogen atom directly bonded to it. Preferred examples are illustrated in column 2 from line 5 up to column 3 line 49. These known aminopolysiloxanes are suitable as a hardener for the present invention.

The present invention relates in another aspect to a novel group of aminopolysiloxanes. These novel compounds contain at least one basic nitrogen which is bonded to silicon via an oxygen and which has at least one hydrogen atom directly bonded to it. Preferred compounds consist of units of the formula (2):

$$R^3_a R^4_b (YO)_c \, SiO_{\frac{(4-a-b-c)}{2}}$$

(2)

wherein each $R^3$ is independently selected from the group comprising alkyl, aryl radicals, each $R^4$ is independently selected from the group comprising hydrogen, alkyl and aryl radicals, Y is independently selected from hydrogen, alkyl, or an organic radical containing basic nitrogen which has at least one hydrogen atom directly bonded to it, a and b are each a real number from 0.0 to 2.0, more in particular from 0.1 to 2.0, c is a real number from 0.1 to 1.0, b/a is ranging from 0.2-2.0 and a+b+c is lower than 4, and wherein 0 to 90 % of -O-Y is hydroxy or alkoxy. In the above formula, a is preferably from 1.4 to 0.4, b is preferably from 0.5 to 1.5 and c is preferably from 0.1 to 0.4.

The radicals represented by Y are preferably those of the formula (3):

$$R^6NHR^5\text{—}$$

(3)

wherein $R^5$ is a bivalent radical and $R^6$ is selected from the group comprising hydrogen, aminoalkyl, aminoalkenyl, aminoaryl, aminocycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl. $R^5$ may be selected from the group comprising alkylene, alkyleneoxy, alkenylene, arylene, aralkylene, aralkenylene, aminoalkylene, alkyleneoxyaralkyloxyalkylene, $CH_2$-phenyl-$(CH_2)_n$-, -phenyl-$(CH_2)_n$-, -C(=O)-, -C(=S)-, - $S(=O)_2$-, alkylene-C(=O)-, alkylene-C(=S)-, alkylene-$S(=O)_2$-, -$NR^7$-C(=O)-, -$NR^7$-alkylene-C(=O)-, or -$NR^7$-$S(=O)_2$ whereby either the C(=O) group or the $S(=O)_2$ group is attached to the $NR^7$ moiety,

optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, alkylcarboxy, ester, alkylester, ether, esteroxy, sulfonic acid, sulfonyl derivatives, sulfinyl derivatives, heterocycle, alkenyl or alkynyl,
wherein $R^7$ is hydrogen, alkyl, alkenyl, aralkyl, cycloalkyl, cycloalkylalkyl, aryl, heterocycle or heterocycloalkyl. The radical $R^6NHR^5$-O- may be a radical of formula (1'):

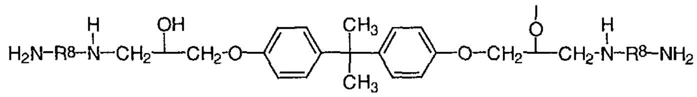

(1')

wherein $R^8$ is selected from the group comprising alkyl, alkenyl, aryl, cycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl. $R^5$ may be alkylene, alkenylene, arylene, aralkylene, aralkenylene, aminoalkylene, alkyleneoxy, alkyleneoxyaralkyloxyalkylene, $CH_2$-phenyl-$(CH_2)_n$-, -phenyl-$(CH_2)_n$-, optionally substituted by alkyl, aryl, cycloalkyl, hydroxy, alkoxy, thioalkyl, amino, amino derivatives, amido, amidoxy, acyl derivatives, acyloxy derivatives, carboxy, alkylcarboxy, ester, alkylester, ether, esteroxy, heterocycle, alkenyl or alkynyl.

Examples of aminoalkyl radicals represented by $R^6$ are selected from the group comprising $H_2N(CH_2)_3$-, $H_2N(CH_2)_2$- , $H_2N(CH_2)_4$-, $H_2N$-$(CH_2)_2$-NH-$(CH_2)_2$- and $C_4H_9$-$NH(CH_2)_2NH(CH_2)_2$-.

A preferred hardener consist of units as depicted in formula (4)

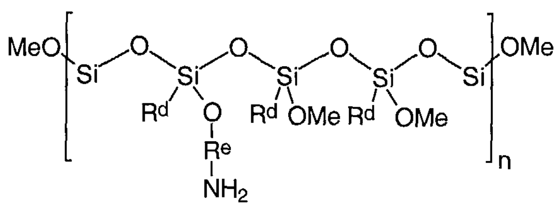

(4)

wherein $R^d$ is an alkyl or an aryl and $R^e$ may be selected from the group comprising alkylene, alkenylene, arylene, aralkylene, aralkenylene, aminoalkylene, alkyleneoxy, alkyleneoxyaralkyloxyalkylene, $CH_2$-phenyl-$(CH_2)_n$-, -phenyl-$(CH_2)_n$-, optionally substituted by alkyl, aryl, cycloalkyl, hydroxy, alkoxy, thioalkyl, amino, amino derivatives, amido, amidoxy, acyl derivatives, acyloxy derivatives, carboxy, alkylcarboxy, ester, alkylester, ether, esteroxy, heterocycle, alkenyl or alkynyl. In an embodiment, $R^d$ is selected from the group comprising methyl, ethyl, propyl and phenyl, and $R^e$ is selected from the group comprising methylene, ethylene and propylene.

The epoxy-polysiloxane composition is prepared by using in the range of from about 10 to 80 % by weight polysiloxane, 10 to 50 % by weight of the epoxy resin ingredient, 5 to 40 % by weight of the aminopolysiloxane hardener, and optionally up to about 5 % by weight catalyst.

It is assumed that the above-identified ingredients react to form a network composition that comprises a continuous phase epoxy-polysiloxane copolymer. Epoxy-polysiloxane compositions of this invention display improved resistance to ultraviolet light and weathering in sunlight without impairing chemical and corrosion resistance when compared to conventional epoxy resin based coatings. Additionally, epoxy-polysiloxane compositions of this invention display improved color and gloss retention that reaches a level exhibited by topclass aliphatic polyurethanes and may obviate the need for top coating.

## DETAILED DESCRIPTION

As used herein, the term "independently selected" indicates that the each radical R so described, can be identical or different. For example each $R^1$ in polysiloxane of formula (1) may be different for each value of n, and within each unit of said polysiloxane.

As used herein "a real number" refers to a number which is positive and includes integers and fractions of integers or any rational or irrational number. For example a is a real number from 0.0 to 2.0 means that a may assume any value within the range from 0.0 to 2.0.

As used herein, the term "alkyl", alone or in combination, means straight and branched chained saturated

hydrocarbon radicals containing from 1 to 10 carbon atoms, preferably from 1 to 8 carbon atoms, more preferably 1-6 carbon atoms. Examples of such radicals include methyl, ethyl, n-propyl, isopropyl n-butyl, isobutyl, sec-butyl, tert-butyl, 2-methylbutyl, pentyl, iso-amyl, hexyl, 3-methylpentyl, octyl and the like.

The term "alkoxy" or "alkyloxy", alone or in combination, means alkyl ether radical wherein the term alkyl is as defined above. Examples of suitable alkyl ether radicals include methoxy, ethoxy, n-propoxy, isopropoxy, n-butoxy, iso-butoxy, sec-butoxy, tert-butoxy, hexanoxy and the like.

The term "alkylene", alone or in combination, defines bivalent straight and branched chained saturated hydrocarbon radicals containing from 1 to 10 carbon atoms, preferably from 1 to 8 carbon atoms, more preferably 1-6 carbon atoms such as, for example, methylene, ethylene, propylene, butylene, pentylene, hexylene and the like.

The term "aminoalkylene" means a bivalent alkylene amine radical, wherein the term "alkylene" is defined as above. Examples of aminoalkylene radicals include aminomethylene ($-CH_2NH-$), aminoethylene ($-CH_2CH_2NH-$), aminopropylene, aminoisopropylene, aminobutylene, aminoisobutylene, aminohexylene and the like.

The term "aryl" alone or in combination, is meant to include phenyl and naphtyl which both may be optionally substituted with one or more substituents independently selected from alkyl, alkoxy, halogen, hydroxy, amino, nitro, cyano, haloalkyl, carboxy, alkoxycarbonyl, cycloalkyl, heterocycle, amido, optionally mono- or disubstituted aminocarbonyl, methylthio, methylsulfonyl, and phenyl optionally substituted with one or more substituents selected from alkyl, alkyloxy, halogen, hydroxy, optionally mono- or disubstituted amino, nitro, cyano, haloalkyl, carboxyl, alkoxycarbonyl, cycloalkyl, heterocycle, optionally mono-or disubstituted aminocarbonyl, methylthio and methylsulfonyl; whereby the optional substituents on any amino function are independently selected from alkyl, alkyloxy, heterocycle, heterocycloalkyl, heterocyclooxy, heterocyclooxyakyl, phenyl, phenyloxy, phenyloxyalkyl, phenylalkyl, alkyloxycarbonylamino, amino, and aminoalkyl whereby each of the amino groups may optionally be mono- or where possible di-substituted with alkyl. Examples of aryl includes phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl and the like.

The term "cycloalkyl" alone or in combination, means a saturated or partially saturated monocyclic, bicyclic or polycyclic alkyl radical wherein each cyclic moiety contains from about 3 to about 8 carbon atoms, more preferably from about 3 to about 7 carbon atoms. Examples of monocyclic cycloalkyl radicals include cyclopropyl, cyclobutyl, cyclopentyl, cyclohexyl, cycloheptyl, cyclodecyl and the like. Examples of polycyclic cycloalkyl radicals include decahydronaphthyl, bicyclo [5.4.0] undecyl, adamantyl, and the like.

Epoxy-polysiloxane compositions are prepared, according to principles of this invention, by combining:

(a) a base component comprising a polysiloxane of formula (1) and an epoxy resin having more than one 1,2-epoxy groups per molecule with an epoxy equivalent weight in the range of from 100 to about 5,000; with

(b) an aminopolysiloxane hardener component as described above;

(c) optionally a catalyst;

(d) optionally a pigment and/or filler component, and

(e) optionally a second amino compound as an additional hardener.

With respect to the polysiloxane used to make up the base component, preferred polysiloxanes consist of those having the formula (1),

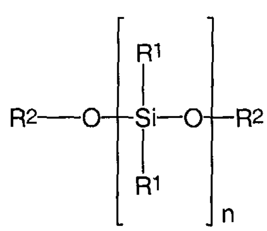

(1)

wherein each $R^1$ is independently selected from the group comprising hydroxy, alkyl, aryl, and alkoxy radicals having up to six carbon atoms. Each $R^2$ is independently selected from the group comprising hydrogen, alkyl and aryl radicals having up to six carbon atoms. "n" is selected so that the polysiloxane ingredient has a molecular weight in the range of from about 400 to about 10,000. It is preferred that $R^1$ and $R^2$ comprise groups having less than six carbon atoms to facilitate rapid hydrolysis of the polysiloxane, which reaction is driven by the volatility of the alcohol analog product of the hydrolysis.

Examples of suitable polysiloxane ingredients include but are not limited to alkoxy- and silanol-functional polysiloxanes. Suitable alkoxy-functional polysiloxanes include but are not limited to: DC-3074 and DC-3037 from Dow Corning; Silres SY-550, and SY-231 from Wacker Silicone; Rhodorsil Resin 10369 A, Rhodorsil 48V750, 48V3500 from Rhodia Silicones and SF1147 from General Electrics. Suitable silanol-functional polysiloxanes include, but are not limited to, Silres SY 300, Silres SY 440, Silres MK and REN 168 from Wacker Silicone, Dow Corning's DC-840, DC233 and DC-431 HS silicone resins and DC-Z-6018 intermediate and Rhodia Silicones' Rhodorsil Resin 6407 and 6482 X.

A preferred epoxy-polysiloxane composition comprises in the range of from 10 to 80 % by weight polysiloxane. Using an amount of the polysiloxane ingredient outside of this range can produce a composition having inferior flexibility, weatherability and chemical resistance. A particularly preferred epoxy-polysiloxane composition comprises approximately 30 % by weight polysiloxane.

The base component comprises a blend of epoxy resin and polysiloxane. Epoxy resins useful in forming the epoxy-polysiloxane composition may be produced by the attachment of an epoxy group to both ends of a paraffinic hydrocarbon chain (for example, diepoxy derived from butanediol) or of a polyether chain, such as $\alpha$-$\omega$-diepoxy polypropylene glycol. More exotic diepoxy resins suitable for said reaction include but are not limited to vinylcyclo hexene dioxide, 3,4-epoxycyclohexylmethyl 3,4-epoxycyclohexanemono carboxylate, 3-(3,4-epoxycyclohexyl)-8,9-epoxy-2,4-dioxaspiro-[5.5]undecane, bis(2,3-epoxycyclopentyl) ether, bis(3,4-epoxy-6-methylcyclohexyl) adipate and resorcinol diglycidyl ether. Other suitable epoxy resins can contain more than two epoxy functional groups per molecule, such as epoxidized soya oils, polyglycidyl ethers of phenolic resins of the novolak type, p-aminophenoltriglycidyl ether or 1,1,2,2-tetra(p-hydroxyphenyl)ethane tetraglycidyl ether. Another class of epoxy resins useful in forming the epoxy-polysiloxane composition, comprises the epoxy polyethers obtained by reacting an epihalohydrin (such as epichlorohydrin or epibromohydrin) with a polyphenol in the presence of an alkali. Suitable polyphenols include resorcinol, catechol, hydroquinone, bis(4-hydroxyphenyl)-2,2-propane, i.e. bisphenol A; bis(4-hydroxyphenyl)-1,1-isobutane, 4,4-dihydroxybenzophenone; bis(4-hydroxyphenyl-1,1-ethane; bis(2-hydroxynaphenyl)-methane; bis(4-hydroxyphenyl) methane i.e. bisphenol F, and 1,5-hydroxynaphthalene. One very common polyepoxy is a polyglycidyl ether of a polyphenol, such as bisphenol A. Another class of epoxy resin suitable for forming the epoxy-polysiloxane composition comprises the hydrogenated epoxy resin based on bisphenol A such as Eponex 1510 from Shell. Other examples of suitable epoxy resins are the polyglycidyl ethers of polyhydric alcohols. These compounds may be derived from such polyhydric alcohols as ethylene glycol, diethylene glycol, triethylene glycol, 1,2- propylene glycol, 1,4-butylene glycol, 1,5-pentanediol, 1,2,6-hexane- triol, glycerol, trimethylolpropane, and bis(4-hydroxycyclohexyl)-2,2- propane. A detailed list of suitable epoxy compounds useful in forming the epoxy-polysiloxane composition can be found in the handbooks A. M. Paquin, "Epoxidverbindungen und Harze" (Epoxide Compounds and Resins), Springer Verlag, Berlin 1958, Chapter IV and H. Lee and K. Neville, "Handbook of Epoxy Resins" MC Graw Hill Book Company, New York 1982 Reissue, as well as C. A. May, "Epoxy Resins-Chemistry and Technology", Marcel Dekker, Inc. New York and Basle, 1988.

More in particular the epoxy resins suitable for said epoxy-polysiloxane composition are non-aromatic epoxy resins that contain more than one 1,2-epoxy groups per molecule. A preferred non-aromatic epoxy resin comprises two 1,2-epoxy groups per molecule. The epoxy resin is preferably in liquid rather than solid form, has an epoxy equivalent weight in the range of from about 100 to 5,000, and has a functionality of about two. In another embodiment, the epoxy resins suitable for said epoxy-polysiloxane composition are non-aromatic hydrogenated epoxy resins.

Suitable epoxy resins include but are not limited to non-aromatic diglycidyl ethers of cyclohexane dimethanol, bisphenol A diglycidyl ether, hydrogenated bisphenol A diglycidyl ether (DGEBA) type epoxy resins, such as Heloxy 107, Eponex 1510 and 1513 from Resolution performance products; Erisys GE-22, Epalloy 5000 and 5001 from CVC Specialty Chemicals; Polypox R11 from UPPC GmbH; Epo Tohto ST-1000 and ST-3000 from Tohto Kasei; Epodil 757 from Air Products; and Araldite DY-C and DY-T from Vantico.

Other suitable non-aromatic epoxy resins include DER 732 and 736 from Dow Chemical; Heloxy 67, 68, 48, 84, 505 and 71 each from Resolution performance products; Erisys GE-20, GE-21, GE-23, GE-30, GE-31 and GE-60 from CVC Specialty Chemicals; Polypox R3, R14, R18, R19, R20 AND R21 from UPPC GmbH; aliphatic epoxy resins such as Araldite DY-T and DY-0397 from Vantico; ERL4221 from Union Carbide; and Aroflint 607 from Reichold Chemicals and bisphenol F diglycidyl ether type epoxy resin such as Epikote 862 from Resolution Performance Products and hydrogenated bisphenol F diglycidyl ether type epoxy resin such as Rütapox VE4261/R from Rutgers Bakelite.

A preferred epoxy-polysiloxane composition comprises in the range of from 10 to 50 % by weight epoxy resin. If the composition comprises less than about 10 % by weight epoxy resin, chemical resistance of the coating will be

compromised. If the composition comprises greater than about 50 % by weight epoxy resin, the weatherability of the coating will be compromised. A particularly preferred composition comprises approximately 20 % by weight epoxy resin.

In preparing epoxy-polysiloxane compositions of the present invention, the proportion of hardener component to resin component can vary over a wide range, regardless of whether the hardener is chosen from the general classes of amines, or from the general formulas (2), (3) or (4) above, or any combination thereof. In general, the epoxy resin component is cured with sufficient hardener to provide at least from about 0.5 to about 1.5 amine equivalent weight per 1 epoxy equivalent weight.

Examples of conventional amino-hardener suitable for use in said composition, include but are not limited to aliphatic, cycloaliphatic amine, aromatic, araliphatic amines, imidazoline group-containing polyaminoamides based on mono or polybasic acids, as well as adducts thereof. These compounds are part of the general state of the art and are described, inter alia, in Lee & Neville, "Handbook of Epoxy Resins", MC Graw Hill Book Company, 1987, chapter 6-1 to 10-19. More in particular, useful amino-hardener which can be optionally added to the composition, include polyamines distinguished by the fact that they carry at least two primary amino groups, in each case bonded to an aliphatic carbon atom. It can also contain further secondary or tertiary amino groups. Suitable polyamines include polyaminoamides (from aliphatic diamines and aliphatic or aromatic dicarboxylic acids) and polyiminoalkylene-diamines and polyoxyethylene-polyamines, polyoxypropylene-polyamines and mixed polyoxyethylene/ polyoxypropylene-polyamines, or amine adducts, such as amine-epoxy resin adducts. Said amines may contain 2 to 40 carbon atoms. For examples, the amines can be selected from polyoxyalkylene-polyamines and polyiminoalkylene-polyamines having 2 to 4 carbon atoms in the alkylene group, and have a number-average degree of polymerization of 2 to 100, other examples of amines can be linear, branched or cyclic aliphatic primary diaminoalkanes having 2 to 40 carbon atoms. In addition, said amines can be araliphatic amines having at least two primary amino groups, each of which are bonded to an aliphatic carbon atom.

Epoxy-polysiloxane compositions of this invention may also contain other components such as, rheological modifiers, plasticizers, thixotropic agents, antifoam agents, adhesion promoters and solvents and the like to achieve the desired properties sought by the user.

Epoxy-polysiloxane compositions of this invention are formulated for application with conventional air, airless, air-assisted airless and electrostatic spray equipment, brush, or roller. The compositions can be used as protective coatings for steel, galvanized steel, aluminum, concrete and other substrates at dry film thickness in the range of from about 50 μm to about 500 μm.

Suitable pigments may be selected from organic and inorganic color pigments which may include titanium dioxide, carbon black, lampblack, zinc oxide, natural and synthetic red, yellow, brown and black iron oxides, toluidine and benzidine yellow, phthalocyanine blue and green, and carbazole violet, and extender pigments including ground and crystalline silica, barium sulfate, magnesium silicate, calcium silicate, mica, micaceous iron oxide, calcium carbonate, zinc powder, aluminum and aluminum silicate, gypsum, feldspar and the like. The amount of pigment that is used to form the composition is understood to vary, depending on the particular composition application, and can be zero when a clear composition is desired. A preferred epoxy -polysiloxane composition may comprise up to about 50 % by weight fine particle size pigment and/or filler. Depending on the particular end use, a preferred coating composition may comprise approximately 25 % by weight fine particle size filler and/or pigment. More in particular said pigment or filler material having a fine particle size selected from the group comprising organic and inorganic pigments, wherein at least 90 % by weight of the pigment is being smaller than 40 microns particle size.

The pigment and/or filler ingredient is typically added to the epoxy resin portion of the resin component and is dispersed with a highspeed dissolver mixer to at least 50 μm fineness of grind, or alternatively is ball milled or sand milled to the same fineness of grind. Selection of a fine particle size pigment or filler and dispersion or milling to about 50 μm grind allows for the atomization of mixed resin and cure components with conventional air, air-assisted airless, airless and electrostatic spray equipment, and provides a smooth, uniform surface appearance after application.

The presence of water during curing is an important requirement of the present invention and water should be present in a sufficient amount to bring about both the hydrolysis of the polysiloxane and the subsequent condensation of the formed silanols. The sources of water are mainly atmospheric humidity and adsorbed moisture on the pigment or filler material. Also the hardener may contain or attract additional amounts of water. Additional water may be added to accelerate cure depending on ambient conditions, such as the use of the coating composition in arid environments. A preferred epoxy-polysiloxane composition comprises up to a stoichiometric amount of water to facilitate hydrolysis.

If desired, water may be added to either the epoxy resin or the hardener. Other sources of water may include trace amounts present in the epoxy resin, the hardener, thinning solvent, or other ingredients. Regardless of its source, the total amount of water that is used should be the stoichiometric amount needed to facilitate the hydrolysis reaction. Water exceeding the stoichiometric amount is undesirable since excess water acts to reduce the surface gloss of the finally-cured composition product.

Up to about 5 % by weight catalyst may be added to the resin component, or may be added as an entirely separate component, to speed drying and curing of the epoxy-polysiloxane compositions of the present invention.

Useful catalysts include metal driers well known in the paint industry, e.g. zinc, manganese, zirconium, titanium, cobalt, iron, lead and tin containing driers. Suitable catalysts include organotin catalysts having the general formula (5):

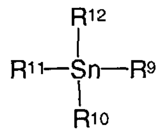

(5)

wherein $R^9$ and $R^{10}$ are each independently selected from the group comprising alkyl, aryl, and alkoxy radicals having up to eleven carbon atoms, and wherein $R^{11}$ and $R^{12}$ are each independently selected from the same groups as $R^9$ and $R^{10}$, or from the group comprising inorganic atoms such as halogens, sulphur or oxygen. Dibutyl tin dilaurate, dibutyl tin diacetate, organotitanates, sodium acetate, and aliphatic secondary or tertiary polyamines including propylamine, ethylamino ethanol, triethanolamine, triethylamine, and methyl diethanol amine may be used alone or in combination to accelerate hydrolytic polycondensation of polysiloxane. A preferred catalyst is dibutyl tin dilaurate.

Other suitable catalysts include acids such as organic acids, inorganic acids, organic sulfonic acids, esters of sulfuric acid and superacids. Organic acids include acetic acid, formic acid and the like. Inorganic acids include sulfuric acid, hydrochloric acid, perchloric acid, nitric acid, phosphoric acid, and the like. Organic sulfonic acids include both aromatic and aliphatic sulfonic acids. Representative sulfonic acids that are commercially available include methanesulfonic, trifluoromethanesulfonic, benzenesulfonic, dodecylbenzenesulfonic, dodecyldiphenyloxide sulfonic, 5-methyl-1-naphthylenesulfonic, and p-toluenesulfonic acid, sulfonated polystyrene, and the sulfonates derived from polytetrafluoroethylenes. Superacids suitable as catalysts are described in G. A. Olah, G. K. S. Prakash, and J. Sommer, Superacids, John Wiley & Sons: New York, 1985. Useful superacids include perchloric, fluorosulfuric, trifluoromethanesulfonic, and perfluoroalkylsulfonic acids. They also include Lewis superacids such as $SbF_5$, $TaF_5$, $NbF_5$, $PF_5$, and $BF_3$. Superacids also include hydrogen fluoride in combination with fluorinated Lewis acids such as $SbF_5$, $TaF_5$, $NbF_5$, $PF_5$, and $BF_3$. They also include oxygenated Bronsted acids such as sulfuric, fluorosulfuric, trifluoromethanesulfonic, and perfluoroalkylsulfonic acid in combination with Lewis acids such as $SbF_5$, $TaF_5$, $NbF_5$, $PF_5$, and $BF_3$.

Other examples of suitable catalysts include nitrate of a polyvalent metal ion such as calcium nitrate, magnesium nitrate, aluminum nitrate, zinc nitrate, or strontium nitrate.

Epoxy-polysiloxane compositions of the present invention are generally low in viscosity and can be spray applied without the addition of a solvent. However, organic solvents may be added to improve atomization and application with electrostatic spray equipment or to improve flow and leveling and appearance when applied by brush, roller, or standard air and airless spray equipment. Exemplary solvents useful for this purpose include aromatic hydrocarbons, esters, ethers, alcohols, ketones, glycols and the like. The amount of solvent added to compositions of the present invention preferably is less than 250 grams per liter and more preferably less than about 120 grams per liter.

Epoxy-polysiloxane compositions of the present invention may also contain rheological modifiers, plasticizers, antifoam agents, thixotropic agents, adhesion promoters, pigment wetting agents, anti-settling agents, diluents, UV light stabilizers, air release agents and dispersing aids. A preferred epoxy-polysiloxane composition may comprise up to about 10 % by weight such modifiers and agents.

Epoxy-polysiloxane compositions of the present invention can be supplied as a two-package system in moisture proof containers. One package contains the epoxy resin, polysiloxane, any pigment and/or filler ingredient, optionally catalysts, additives and solvent if desired. The second package contains an aminopolysiloxane optionally a second amine compound as an additional hardener and optionally catalysts, solvents and additives.

Epoxy-polysiloxane compositions of the present invention can be applied and fully cure at ambient temperature conditions in the range of from about -10°C to 50°C. At temperatures below 0°C absence of water has a strong influence on the curing speed and also on the final properties of the coating. However, compositions of the present invention may be cured by additional heating.

The present invention further relates to methods for the preparation of epoxy-polysiloxane compositions according to the invention, comprising the steps of combining: a polysiloxane of formula (1) as described above with an epoxy resin having more than one 1,2-epoxy groups per molecule with an epoxy equivalent weight in the range of from 100 to about 5,000; a sufficient amount of an aminopolysiloxane hardener component having active hydrogens, preferably at least two active hydrogens; an optional catalyst; and a sufficient amount of water to facilitate hydrolysis and polycondensation reactions to form the fully-cured cross-linked epoxy-polysiloxane polymer composition at ambient temperature. Preferably, the aminopolysiloxane hardener provides in the range of from 0.5 to 1.5 amine equivalent weight per one epoxy equivalent weight. According to an embodiment said polysiloxane is selected from the group comprising alkoxy- and silanol-functional polysiloxanes having a molecular weight in the range of from about 400 to

10,000.

The present invention further encompasses a substrate provided with at least one layer of a cured network of epoxy -polysiloxane polymer composition according to the invention.

The present invention further relates to a method for making a fully-cured thermosetting epoxy-polysiloxane composition according to the invention comprising the steps of:

- forming a base component by combining: an epoxy resin as described above; a polysiloxane of formula (1) as described above; and

- curing the base component at ambient temperature by adding thereto: an aminopolysiloxane with active hydrogens, preferably at least two active hydrogens, able to react with epoxy groups in the epoxy resin to form polymers containing hydroxyl groups, which are able to react with the silanol groups of hydrolyzed polysiloxane to form a polymer network, wherein the epoxy chain polymers and polysiloxane polymers polymerize to form a fully-cured epoxy-polysiloxane polymer composition and optionally a catalyst to facilitate curing the base component at ambient temperature.

In another embodiment, said polysiloxane is selected from the group comprising alkoxy-and silanol-functional polysiloxanes having a molecular weight in the range of from 400 to 10,000.

While not wishing to be bound by any particular theory, it is believed that epoxy-polysiloxane compositions of the present invention may be cured by: (1) the reaction of the epoxy resin with the aminopolysiloxane and/or a second amine compound to form epoxy polymer chains; (2) the hydrolytic polycondensation of the polysiloxane ingredient to produce alcohol and polysiloxane polymer; and (3) the copolymerization of the epoxy polymer chains with the polysiloxane polymer. This copolymerization reaction is believed to take place via the condensation reaction of silanol groups of hydrolyzed polysiloxane (polymer) with silanol and hydroxyl groups in the epoxy polymer chains. Eventually a fully-cured epoxy-polysiloxane polymer composition is formed. The amine moiety of the aminopolysiloxane and the optional second amine compound as an additional hardener undergoes the epoxy-amine addition reaction and the silane moiety of the aminopolysiloxane undergoes hydrolytic polycondensation with the polysiloxane. In its cured form, the epoxy-polysiloxane composition exists as a uniformly dispersed arrangement of a continuous polysiloxane polymer matrix intertwined with epoxy polymer chain fragments that are cross-linked with the polysiloxane polymer matrix, thereby forming a polymer network that has substantial advantages over conventional polysiloxane systems.

Epoxy-polysiloxane compositions of the present invention exhibit an unexpected and surprising improvement in gloss retention. More over the composition according to the invention have improved mechanical cohesive strength and a high degree of flexibility which makes it possible to apply this class of coatings on complex steel structures with very limited risk of cracking.

The compositions according to the invention are compatible with suitable dispenser tinting systems, and permit the supply of large variety of color easily.

Pigmentation of these compositions may be generally done with normal light fast paint pigments, and for specific conditions, glass-flake addition can be considered to further reduce water permeation and to extend service life.

These compositions can find various industrial applications because of their favorable properties such as a long pot life in combination with reasonably fast curing times, even under high atmospheric humidity. Typical industrial applications for said compositions include, for example, use for the production of shaped articles (casting resins) for tool construction, or for the production of coatings and/or intermediate coatings on many types of substrates, for example, on those of an organic or inorganic nature, such as textiles of natural or synthetic origin, plastics, glass, ceramic and building materials, such as concrete, fiberboards and artificial stones, but in particular on metals, such as optionally pretreated sheet steel, cast iron, aluminum and nonferrous metals, such as brass, bronze and copper.

The compositions according to the invention can furthermore be employed as constituents of adhesives, putties, laminating resins and synthetic resin cements, and in particular as constituents of paints and coatings for coating industrial objects, domestic appliances and furniture and in the shipbuilding industry, land storage tanks and pipelines and in the building industry, such as, for example, refrigerators, washing machines, electrical appliances, windows and doors.

These coatings can be applied, for example by brushing, spraying, rolling, dipping and the like. A particularly preferred field of use for the coatings according to the invention is paint formulations.

These and other features of the present invention will become more apparent upon consideration of the following examples and figures. Although epoxy-polysiloxane compositions of the present invention have been described with considerable detail with reference to certain preferred variations thereof, other variations are possible. Therefore, the spirit and scope of the appended claims should not be limited to the preferred variations described herein.

BRIEF DESCRIPTION OF THE FIGURES

Figure 1 represents a graph illustrating the gloss retention profile of coatings according to the invention and comparative examples.

EXAMPLES

Example 1: Synthesis of an aminopolysiloxane according to the invention.

306 g of 2-amino-1-butanol and 832 g of polysiloxane resin DC3074 (Dow Corning) are mixed in a reaction vessel under nitrogen atmosphere equipped with a mechanical stirrer, a distilling column and a condenser. 120g of heptane and 1 g of titanium (IV) butoxide are added. The mixture is then heated at 175°C until all azeotrope mixture is distilled off. The last volatile alcohols formed during reaction are then removed by applying vacuum. The modified polysiloxane has a MW of 843 and a polydispersity of 4.08 (determined by GPC). The amino value is 200 mg KOH/g. The Haake viscosity is 13 dPa.s at 23°C. The density at 20°C is 1.132 g/l.

Example 2: Coatings

Coating 1 is a comparative example. It is a conventional coating composition comprising bisphenol A epoxy resin 75 wt% solution in xylene with an epoxy equivalent weight of 610-640 g/eq and as a hardener, a commercial aminopolysiloxane bought from Wacker under the name Silres 44100 VP, having Si-C bonded amine groups and an amine value of 227 mg KOH/g (AHEW 247 g/eq.).

Coating 2 is an epoxy-polysiloxane according to the invention comprising a polysiloxane DC 3074, bisphenol A epoxy resin 75 wt% solution in xylene with an epoxy equivalent weight of 610-640 g/eq and as a hardener, a commercial aminopolysiloxane bought from Wacker under the name Silres 44100 VP, having Si-C bonded amine groups and an amine value of 227 mg KOH/g (AHEW 247 g/eq.).

Coating 3 is a comparative example. It is a commercial coating from Ameron, sold under the name of Ameron PSX 700 comprising a polysiloxane, hydrogenated bisphenol A epoxy resin with an epoxy equivalent weight of 210-238 g/eq and an amino-silane as a hardener (PSX 700 Cure from Ameron).

Coating 4 is an epoxy-polysiloxane composition according to the invention, comprising a polysiloxane DC 3074, a hydrogenated bisphenol A epoxy resin with an epoxy equivalent weight of 210-238 g/eq, and as a hardener, a commercial aminopolysiloxane bought from Wacker under the name Silres 44100 VP, having Si-C bonded amine groups and an amine value of 227 mg KOH/g (AHEW 247 g/eq.).

Coating 5 is an epoxy-polysiloxane composition according to the invention, comprising a polysiloxane DC3074 (Dow Corning), hydrogenated bisphenol A epoxy resin with an epoxy equivalent weight of 210-238 g/eq and the aminopolysiloxane hardener of example 1.

The composition of the coatings is shown in Table 1.

Table 1

| **Compositions** | **Weight (grams)** | | | | |
|---|---|---|---|---|---|
| **Coating number** | **1** | **2** | **3** | **4** | **5** |
| *Pigmented base component* | | | | | |
| Bis. A epoxy resin, 75 wt% solution in xylene, Epoxy eq. wt. = 610-640 g/eq | 60 | 32 | - | - | - |
| Hydrogenated Bis. A epoxy resin, Epoxy eq. wt. = 210-238 g/eq | - | - | - | 24 | 24 |
| Thixotrope agent | 0.5 | 0.5 | - | 0.5 | 0.5 |
| Defoamer | 0.5 | 0.5 | - | 0.5 | 0.5 |
| Titanium dioxide | 41.5 | 41.5 | - | 41.5 | 41.5 |
| Dow Corning 3074 | - | 36 | - | 36 | 36 |
| Hindered Amine Light Stabilizer | 1.5 | 1.5 | - | 1.5 | 1.5 |

Table 1 (continued)

| Compositions | Weight (grams) | | | | |
|---|---|---|---|---|---|
| Coating number | 1 | 2 | 3 | 4 | 5 |
| *Pigmented base component* | | | | | |
| Catalyst | 1 | 2 | - | 2 | 2 |
| Xylene | 30 | 8 | - | 4 | 4 |
| PSX 700 Resin | - | - | 110 | - | - |
| Total | 135 | 122 | 110 | 110 | 110 |
| EEW [g/eq.] | 1406 | 2383 | - | 995 | 995 |
| *Hardener component* | | | | | |
| Silres 44100 VP | 23.7 | 12.6 | - | 27.3 | - |
| Hardener of example 1 | - | - | - | - | 31.1 |
| PSX 700 Cure | - | - | 17.9 | - | - |
| AHEW [g/eq.] | 247 | 247 | - | 247 | 281 |

Example 3: Gloss retention measurement

The determination of the gloss retention was done according to ASTM G53, in QUV-B testing (313 nm peak wavelength). The test was designed to simulate accelerated weathering conditions caused by sunlight. Test panels are exposed to alternating ultraviolet and humidity cycles. They are checked periodically and degradation is measured by loss of gloss. The results are shown in Table 2 and Figure 1.

Table 2

| Hours \ Gloss retention [%] | Coating 1 | Coating 2 | Coating 3 | Coating 4 | Coating 5 |
|---|---|---|---|---|---|
| 0 | 100,0 | 100,0 | 100,0 | 100,0 | 100,0 |
| 168 | 61,0 | 96,0 | 97,0 | 98,0 | 97,0 |
| 336 | 42,0 | 94,0 | 92,0 | 95,0 | 95,0 |
| 672 | 28,0 | 88,0 | 86,0 | 90,0 | 92,0 |
| 1008 | 25,0 | 85,0 | 79,0 | 87,0 | 87,0 |
| 1344 | 22,0 | 81,0 | 70,0 | 83,0 | 84,0 |
| 1680 | 20,0 | 76,0 | 60,0 | 80,0 | 79,0 |
| 2016 | 18,0 | 72,0 | 50,0 | 74,0 | 75,0 |
| 2688 | 15,0 | 63,0 | 31,0 | 69,0 | 69,0 |
| 3360 | 12,0 | 58,0 | 19,0 | 62,0 | 64,0 |
| 4032 | 10,0 | 52,0 | 13,0 | 57,0 | 57,0 |

This test clearly shows that epoxy-polysiloxane coating compositions according to the invention have better gloss retention, weathering and UV resistance when compared to conventional epoxy coating compositions.

The compositions according to the invention therefore provide high gloss coatings with excellent UV resistance and gloss retention.

## Claims

1. Epoxy-polysiloxane composition obtainable by combining the following ingredients:

   - a polysiloxane of formula (1), wherein each $R^1$ is independently selected from the group comprising hydroxy, alkyl, aryl and alkoxy radicals having up to six carbon atoms, each $R^2$ is independently selected from the group comprising hydrogen, alkyl and aryl radicals having up to six carbon atoms and, wherein n is selected so that the molecular weight for the polysiloxane is in the range of from about 400 to 10,000, with

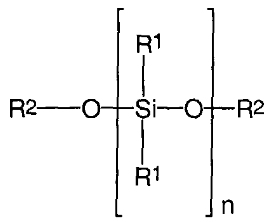

(1)

   - an epoxy resin having more than one 1,2-epoxy groups per molecule with an epoxy equivalent weight in the range of from 100 to about 5,000; and

   - an aminopolysiloxane hardener component having active hydrogens able to react with the epoxy groups in the epoxy resin to form epoxy polymers, and able to react with the polysiloxane to form polysiloxane polymers, wherein the epoxy chain polymers and polysiloxane polymers polymerize to form a cured epoxy-polysiloxane polymer composition.

2. Composition according to claim 1, wherein the aminopolysiloxane hardener consists of units of the formula (2)

$$R^3_a R^4_b (YO)_c SiO_{\frac{(4-a-b-c)}{2}}$$

(2)

wherein each $R^3$ is independently selected from the group comprising alkyl, aryl radicals, each $R^4$ is independently selected from the group comprising hydrogen, alkyl and aryl radicals, Y is independently selected from hydrogen, alkyl, or an organic radical containing basic nitrogen which has at least one hydrogen atom directly bonded to it, a and b are each a real number from 0.0 to 2.0, more in particular from 0.1 to 2.0, c is a real number from 0.1 to 1.0, b/a is ranging from 0.2-2.0 and a+b+c is lower than 4, and wherein 0 to 90 % of -O-Y is hydroxy or alkoxy.

3. Composition according to claim 2, wherein in compound of formula (2), a is from 0.1 to 0.4, b is from 0.5 to 1.5 and c is from 0.1 to 1.0.

4. Composition according to claim 2, wherein the radical Y is of formula (3)

$$R^6NHR^5—$$

(3)

wherein $R^5$ is a bivalent radical and $R^6$ is selected from the group comprising hydrogen, aminoalkyl, aminoalkenyl, aminoaryl, aminocycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl. $R^5$ may be selected from the group comprising alkylene, alkyleneoxy, alkenylene, arylene, aralkylene, aralkenylene, aminoalkylene, alkyleneoxyaralkyloxyalkylene, $CH_2$-phenyl-$(CH_2)_n$-, -phenyl-$(CH_2)_n$-, -C(=O)-, -C(=S)-, -S(=O)$_2$-, alkylene-C(=O)-, alkylene-C(=S)-, alkylene-S(=O)$_2$-,

$-NR^7-C(=O)-$, $-NR^7$-alkylene-$C(=O)-$, or $-NR^7-S(=O)_2$ whereby either the C(=O) group or the $S(=O)_2$ group is attached to the $NR^7$ moiety, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, alkylcarboxy, ester, alkylester, ether, esteroxy, sulfonic acid, sulfonyl derivatives, sulfinyl derivatives, heterocycle, alkenyl or alkynyl, wherein $R^7$ is hydrogen, alkyl, alkenyl, aralkyl, cycloalkyl, cycloalkylalkyl, aryl, heterocycle or heterocycloalkyl.

**5.** Composition according to claim 4 wherein radical the radical $R^6NHR^5$-O- is a radical of formula (1'):

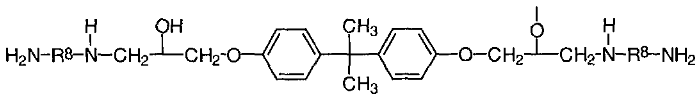

(1')

wherein $R^8$ is selected from the group comprising alkyl, alkenyl, aryl, cycloalkyl radical, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, heterocycle, alkenyl or alkynyl. $R^5$ may be alkylene, alkenylene, arylene, aralkylene, aralkenylene, aminoalkylene, alkyleneoxy, alkyleneoxyaralkyloxyalkylene, $CH_2$-phenyl-$(CH_2)_n$-, -phenyl-$(CH_2)_n$-, optionally substituted by alkyl, aryl, cycloalkyl, hydroxy, alkoxy, thioalkyl, amino, amino derivatives, amido, amidoxy, acyl derivatives, acyloxy derivatives, carboxy, alkylcarboxy, ester, alkylester, ether, esteroxy, heterocycle, alkenyl or alkynyl.

**6.** Composition according to claim 4, wherein $R^6$ is selected from the group comprising $H_2N(CH_2)_3$-, $H_2N(CH_2)_2$- , $H_2N(CH_2)_4$-, $H_2N$-$(CH_2)_2$-NH-$(CH_2)_2$- and $C_4H_9$-$NH(CH_2)_2NH(CH_2)_2$-.

**7.** Composition according to any of claims 1-6, wherein said aminopolysiloxane is of formula (4)

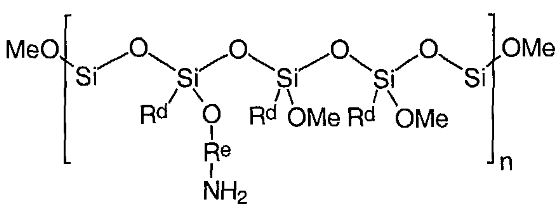

(4)

wherein $R^d$ is an alkyl or an aryl and $R^e$ is selected from the group comprising alkylene, alkenylene, arylene, aralkylene, aralkenylene, aminoalkylene, alkyleneoxy, alkyleneoxyaralkyloxyalkylene, $CH_2$-phenyl-$(CH_2)_n$-, -phenyl-$(CH_2)_n$-, optionally substituted by alkyl, aryl, cycloalkyl, hydroxy, alkoxy, thioalkyl, amino, amino derivatives, amido, amidoxy, acyl derivatives, acyloxy derivatives, carboxy, alkylcarboxy, ester, alkylester, ether, esteroxy, heterocycle, alkenyl or alkynyl.

**8.** Composition according to claim 7, wherein $R^d$ is selected from the group comprising methyl, ethyl, propyl and phenyl; and $R^e$ is selected from the group comprising methylene, ethylene and propylene

**9.** Composition according to any of claims 1-8, wherein the epoxy resin is a non-aromatic epoxy resin.

**10.** Composition according to claim 9, wherein the epoxy resin is a non-aromatic hydrogenated epoxy resin.

**11.** Composition according to any of claims 9 or 10, wherein the non-aromatic epoxy resin is selected from the group of cycloaliphatic epoxy resins comprising diglycidyl ethers of cyclohexane dimethanol and diglycidyl ethers of hydrogenated bisphenol A epoxy resins.

**12.** Composition according to any of claims 1-11, wherein the composition additionally comprises at least one metal catalyst to facilitate cure at ambient temperature,

wherein the catalyst is selected from the group comprising zinc, manganese, zirconium, titanium, cobalt, iron, lead, and tin containing driers.

**13.** Composition according to any of claims 1-12, comprising at least one additional ingredient selected from the group comprising rheological modifiers, plasticizers, antifoam agents, thixotropic agents, pigment wetting agents, adhesion promoters, anti-settling agents, diluents, UV light stabilizers, air release agents, dispersing aids, and mixtures thereof.

**14.** Composition according to any of claims 1-13, further comprising a pigment or filler material having a fine particle size selected from the group comprising organic and inorganic pigments, wherein at least 90 % by weight of the pigment being smaller than 40 microns particle size.

**15.** Composition according to any of claims 1-14 comprising in the range of from about 10 to 80 % by weight polysiloxane, 10 to 50 % by weight of the epoxy resin ingredient, 5-40 % by weight of the aminopolysiloxane hardener, and optionally up to about 5 % by weight catalyst.

**16.** Method for the preparation of an epoxy-polysiloxane polymer composition according to any of claims 1-15 comprising the steps of combining:

- a polysiloxane of formula (1), wherein each $R^1$ is independently selected from the group comprising hydroxy, alkyl, aryl and alkoxy radicals having up to six carbon atoms, each $R^2$ is independently selected from the group comprising hydrogen, alkyl and aryl radicals having up to six carbon atoms and, wherein n is selected so that the molecular weight for the polysiloxane is in the range of from about 400 to 10,000; with

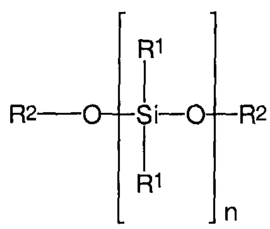

(1)

- an epoxy resin having more than one 1,2-epoxy groups per molecule with an epoxy equivalent weight in the range of from 100 to about 5,000;
- a sufficient amount of an aminopolysiloxane hardener component having active hydrogens,
- optionally a catalyst; and
- a sufficient amount of water to facilitate hydrolysis and polycondensation reactions to form the fully-cured cross-linked epoxy-polysiloxane polymer composition at ambient temperature.

**17.** Method according to claim 16, wherein said polysiloxane is selected from the group comprising alkoxy- and silanol-functional polysiloxanes having a molecular weight in the range of from about 400 to 10,000.

**18.** Substrate provided with at least one layer of a cured network according to any of claims 1-15.

**19.** Method for making a fully-cured thermosetting epoxy-polysiloxane composition according to any of claims 1-15, comprising the steps of:

forming a base component by combining:

- an epoxy resin having more than one 1,2-epoxy groups per molecule with an epoxy equivalent weight in the range of from 100 to about 5,000;

- a polysiloxane of formula (1), wherein each $R^1$ is independently selected from the group comprising hydroxy, alkyl, aryl and alkoxy radicals having up to six carbon atoms, each $R^2$ is independently selected from the group comprising hydrogen, alkyl and aryl radicals having up to six carbon atoms and, wherein n is selected so that the molecular weight for the polysiloxane is in the range of from about 400 to 10,000; with

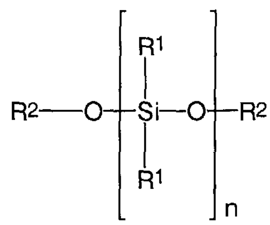

(1)

curing the base component at ambient temperature by adding thereto:

- an aminopolysiloxane with active hydrogens able to react with epoxy groups in the epoxy resin to form polymers containing hydroxyl groups, which are able to react with the silanol groups of hydrolyzed polysiloxane to form a polymer network, wherein the epoxy chain polymers and polysiloxane polymers polymerize to form a fully-cured epoxy-polysiloxane polymer composition and

- optionally a catalyst to facilitate curing the base component at ambient temperature.

**20.** Method according to claim 19, wherein said polysiloxane is selected from the group comprising alkoxy- and silanol-functional polysiloxanes having a molecular weight in the range of from 400 to 10,000.

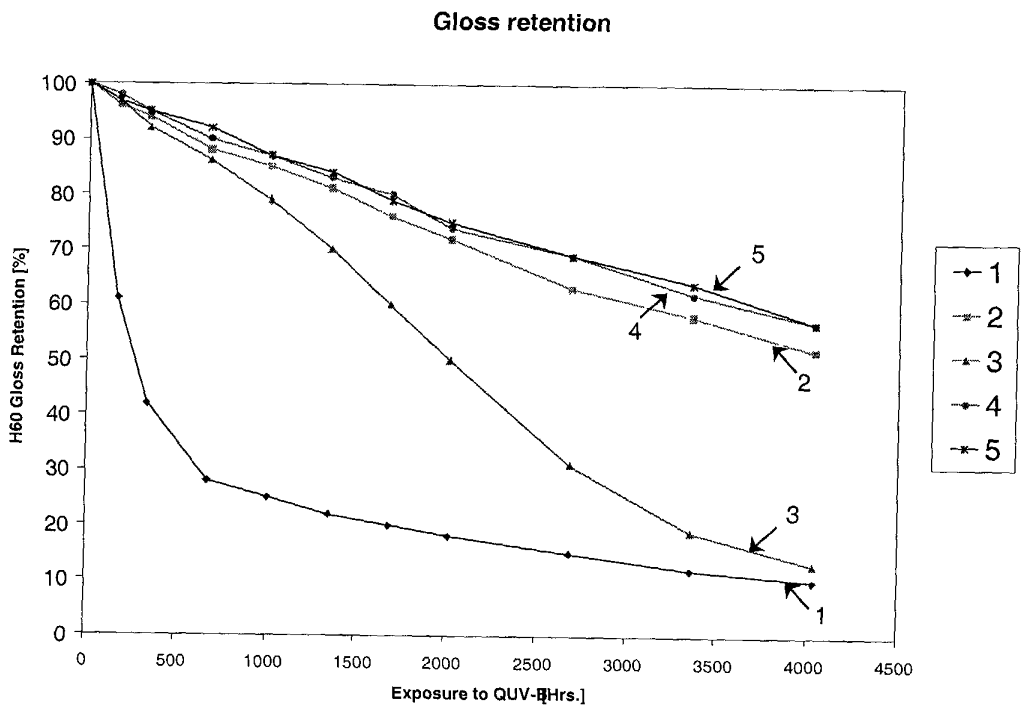
Gloss retention
H60 Gloss Retention [%]
100
90
80
70
60
50
40
30
20
10
0
0
500
1000
1500
2000
2500
3000
3500
4000
4500
Exposure to QUV-B [Hrs.]
1
2
3
4
5

**Figure 1**

European Patent Office

# EUROPEAN SEARCH REPORT

Application Number
EP 02 44 7079

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 618 860 A (MOWRER NORMAN R ET AL) 8 April 1997 (1997-04-08)<br>* examples *<br>* claims * | 1-20 | C08L83/04<br>C09D183/04<br>C08L63/00<br>C09D163/00 |
| A | US 5 804 616 A (MOWRER NORMAN R ET AL) 8 September 1998 (1998-09-08)<br>* examples *<br>* claims * | 1-20 | |
| A | US 6 177 489 B1 (TOMIYOSHI KAZUTOSHI ET AL) 23 January 2001 (2001-01-23)<br>* claims * | 1-20 | |

TECHNICAL FIELDS SEARCHED (Int.Cl.7)
C08L
C09D

The present search report has been drawn up for all claims

| Place of search | Date of completion of the search | Examiner |
|---|---|---|
| MUNICH | 26 September 2002 | Kolitz, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 02 44 7079

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2002

| Patent document cited in search report | | Publication date | Patent family member(s) | | | Publication date |
|---|---|---|---|---|---|---|
| US 5618860 | A | 08-04-1997 | AT | 187185 | T | 15-12-1999 |
| | | | AU | 671943 | B2 | 12-09-1996 |
| | | | AU | 3177395 | A | 23-05-1996 |
| | | | AU | 3555495 | A | 17-06-1996 |
| | | | BR | 9510395 | A | 23-12-1997 |
| | | | CN | 1173191 | A | 11-02-1998 |
| | | | CZ | 9701527 | A3 | 15-07-1998 |
| | | | DE | 69513685 | D1 | 05-01-2000 |
| | | | DE | 69513685 | T2 | 04-05-2000 |
| | | | DK | 792314 | T3 | 01-05-2000 |
| | | | EP | 0792314 | A1 | 03-09-1997 |
| | | | ES | 2139243 | T3 | 01-02-2000 |
| | | | FI | 972098 | A | 08-07-1997 |
| | | | GR | 3032651 | T3 | 30-06-2000 |
| | | | HU | 77451 | A2 | 28-04-1998 |
| | | | JP | 10509195 | T | 08-09-1998 |
| | | | NO | 972251 | A | 18-07-1997 |
| | | | NZ | 293180 | A | 27-04-1998 |
| | | | PL | 324038 | A1 | 11-05-1998 |
| | | | RU | 2159260 | C2 | 20-11-2000 |
| | | | WO | 9616109 | A1 | 30-05-1996 |
| | | | US | 5804616 | A | 08-09-1998 |
| US 5804616 | A | 08-09-1998 | US | 5618860 | A | 08-04-1997 |
| | | | AU | 726606 | B2 | 16-11-2000 |
| | | | AU | 2932997 | A | 18-08-1998 |
| | | | BR | 9714295 | A | 25-04-2000 |
| | | | CN | 1247547 | A | 15-03-2000 |
| | | | EP | 0954547 | A1 | 10-11-1999 |
| | | | HU | 0000660 | A2 | 28-07-2000 |
| | | | JP | 2001509188 | T | 10-07-2001 |
| | | | NO | 993629 | A | 27-09-1999 |
| | | | NZ | 336844 | A | 28-01-2000 |
| | | | PL | 334799 | A1 | 13-03-2000 |
| | | | TR | 9902369 | T2 | 21-04-2000 |
| | | | TW | 469287 | B | 21-12-2001 |
| | | | WO | 9832792 | A1 | 30-07-1998 |
| | | | AT | 187185 | T | 15-12-1999 |
| | | | AU | 671943 | B2 | 12-09-1996 |
| | | | AU | 3177395 | A | 23-05-1996 |
| | | | AU | 3555495 | A | 17-06-1996 |
| | | | BR | 9510395 | A | 23-12-1997 |
| | | | CN | 1173191 | A | 11-02-1998 |
| | | | CZ | 9701527 | A3 | 15-07-1998 |
| | | | DE | 69513685 | D1 | 05-01-2000 |
| | | | DE | 69513685 | T2 | 04-05-2000 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 02 44 7079

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2002

| Patent document cited in search report | Publication date | Patent family member(s) | Publication date |
|---|---|---|---|
| US 5804616 A | | DK 792314 T3 | 01-05-2000 |
| | | EP 0792314 A1 | 03-09-1997 |
| | | ES 2139243 T3 | 01-02-2000 |
| | | FI 972098 A | 08-07-1997 |
| | | GR 3032651 T3 | 30-06-2000 |
| | | HU 77451 A2 | 28-04-1998 |
| | | JP 10509195 T | 08-09-1998 |
| | | NO 972251 A | 18-07-1997 |
| | | NZ 293180 A | 27-04-1998 |
| | | PL 324038 A1 | 11-05-1998 |
| | | RU 2159260 C2 | 20-11-2000 |
| | | WO 9616109 A1 | 30-05-1996 |
| US 6177489 B1 | 23-01-2001 | JP 10195179 A | 28-07-1998 |
| | | DE 19800178 A1 | 09-07-1998 |

EPO FORM P0459

For more details about this annex : see Official Journal of the European Patent Office, No. 12/82